(19) Europäisches Patentamt
European Patent Office
Office européen des brevets

(11) **EP 2 389 723 B1**

(12) **EUROPÄISCHE PATENTSCHRIFT**

(45) Veröffentlichungstag und Bekanntmachung des Hinweises auf die Patenterteilung:
**12.06.2013 Patentblatt 2013/24**

(21) Anmeldenummer: **09777883.1**

(22) Anmeldetag: **14.08.2009**

(51) Int Cl.:
*H02P 13/00* $^{(2006.01)}$   *H02J 3/18* $^{(2006.01)}$
*H02P 13/06* $^{(2006.01)}$

(86) Internationale Anmeldenummer:
**PCT/EP2009/005908**

(87) Internationale Veröffentlichungsnummer:
**WO 2010/045995 (29.04.2010 Gazette 2010/17)**

(54) **VERFAHREN ZUR PARALLELSTEUERUNG VON TRANSFORMATOREN MIT STUFENSCHALTERN**

METHOD FOR PARALLEL CONTROL OF TRANSFORMERS WITH TAP CHANGERS

MÉTHODE POUR LE CONTRÔLE PARALLÈLE DES TRANSFORMATEURS AVEC DES CHANGEURS DE PRISE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.10.2008 DE 102008053193**

(43) Veröffentlichungstag der Anmeldung:
**30.11.2011 Patentblatt 2011/48**

(73) Patentinhaber: **Maschinenfabrik Reinhausen GmbH**
**93059 Regensburg (DE)**

(72) Erfinder:
• **KUGLER, Kurt**
**93138 Lappersdorf (DE)**
• **PROELSS, Helmut**
**93057 Regensburg (DE)**
• **VIERECK, Karsten**
**93059 Regensburg (DE)**

(56) Entgegenhaltungen:
EP-A2- 0 482 361   WO-A1-93/17480
DE-A1- 10 039 918   DE-C1- 4 004 671
GB-A- 2 417 376

**Beschreibung**

Die Erfindung betrifft ein Verfahren zur Parallelsteuerung von zwei oder mehr parallel geschalteten Stufentransformatoren, deren Übersetzungsverhältnis jeweils durch einen Stufenschalter eingestellt wird.

Für die Parallelsteuerung von Stufentransformatoren haben sich im Wesentlichen zwei Verfahren durchgesetzt.

Das erste Verfahren, die sogen. Gleichlaufsteuerung, kann nur bei Transformatoren gleicher Spannung, Leistung, Kurzschlussspannung, Stufenspannung und Stufenzahl durchgeführt werden. Bei diesen Verfahren müssen alle Transformatoren der jeweils parallelen Gruppe in der gleichen Betriebsstellung stehen. Dieses Verfahren, auch als "Master-Follower-Verfahren" bekannt, ist im Übrigen die einzige Methode für die Parallelsteuerung von Einphasen-Transformatoren in einer Drehstromgruppe.

Das zweite Verfahren, mit dem sich auch die vorliegende Erfindung befasst, arbeitet nach der sogen. Kreisblindstrommethode.

Ein solches Verfahren ist aus der DE 100 39 918 C2 bekannt. Es betrifft eine selbst adaptierende Power-Factor-Regelung zur Minimierung von durch parallel geschaltete Drehstromtransformatoren in Netzen entstehende Kreisströme. Diese bekannte Lösung widmet sich dem Problem, dass bei der Spannungsregelung von parallel geschalteten Drehstromtransformatoren die unvermeidlichen Kreisströme, wenn sie nicht minimiert werden, zu erheblichen Belastungen für die einzelnen Transformatoren und das Netz führen können.

Die DE 40 04 671 C1 betrifft ein weiteres Verfahren, das sich mit der selbsttätigen rechnergestützten Erkennung der Anlagenkonfiguration bei einer Vielzahl von an mehreren Sammelschienen beliebig parallel geschalteten Stufentransformatoren befasst und ein geeignetes Verfahren zu deren Regelung offenbart. Dabei ist jedem Stufentransformator ein eigener elektronischer Regler zugeordnet.

Die in den genannten Druckschriften beschriebene Art der Parallellaufsteuerung wird hauptsächlich beim Parallellauf von Transformatoren mit unterschiedlicher Stufenzahl und unterschiedlichen Stufenspannungen angewendet. Voraussetzung ist jedoch, dass jeder Transformator in der parallel laufenden Gruppe von einem eigenen Spannungsregler gesteuert wird. Darüber hinaus ist für jeden Transformator ein eigenes Parallelsteuergerät, im Englischen als "Parallel Balancing Module" bezeichnet, erforderlich. Ein solches Verfahren ist z. B. von der ANSI (American National Standards Institute) festgelegt. Die genannten Parallelsteuergeräte werden dabei so geschaltet, dass der sich einstellende Kreisblindstrom nur über die eingebaute Reaktanz des jeweiligen Parallelsteuergerätes fließt. Der Kreisblindstrom wird damit vom Betriebsstrom getrennt und erzeugt als praktisch rein induktiver Strom an der Reaktanz des jeweiligen Parallelsteuergerätes eine stromproportionale Wechselspannung, die dem Istwert des zugehörigen Spannungsreglers phasenrichtig aufgeschaltet wird.

Aus der GB 2 417 376 A ist eine Spannungsüberwachungsvorrichtung zur Reduktion von Kreisblindströmen bekannt. Diese nutzt ein Verfahren, bei dem die Kreisblindströme aus der Spannung und dem Strom eines jeden Transformators ermittelt werden. Dabei unterscheidet das Verfahren zischen Transformatoren die parallel an einem Ort angeordnet sind und Transformatoren die über ein Netzwerk miteinander verbunden sind.

Aus der WO 9317480 A1 ist eine Anordnung zur Spannungsregelung beim Parallelbetrieb von Transformatoren bekannt. Dabei weist jeder Stufenschalter einen Digitalregler auf. Die Digitalregler sind untereinander zu einem Ring verbunden und tauschen Mess- und Regelwerte aus, um die zwischen den Transformatoren fließenden Ausgleichsströme bzw. Kreisblindströme auf ein Minimum zu regeln.

Aus der EP 0 482 361 A2 ist ein Verfahren zur Parallellaufregelung von Stufentransformatoren bekannt. Dabei ist jedem Stufentransformator ein Spannungsregler zugeordnet, der die Amplituden von Spannung und Strom und den Phasenwinkel an jedem Stufentransformator misst und an ein Parallelsteuergerät übermittelt.

Durch Vergleich des Soll- und Istwertes regelt jeder Spannungsregler auf den gleichen eingestellten Sollwert zu, so dass der Kreisblindstrom ein Minimum erreicht - daher der Name dieses Verfahrens.

Dieses bekannte Verfahren der Parallelsteuerung nach ANSI soll nachfolgend am Beispiel von zwei parallel arbeitenden Transformatoren noch näher erläutert werden. Es wird angenommen, dass der erste Transformator durch eine abweichende Betriebsstellung einen Kreisblindstrom hervorruft, der am zweiten Transformator in entgegengesetzter Richtung fließt. Dieser Kreisblindstrom erzeugt an den Reaktanzen der Parallelsteuergeräte eine proportionale Wechselspannung, die zu den Ist-Spannungen des jeweiligen Spannungsreglers addiert wird. Dadurch erhält der Spannungsregler am ersten Transformator eine zu hohe Ist-Spannung und der Spannungsregler am zweiten Transformator eine zu niedrige Ist-Spannung. Durch die nach oben abweichende Betriebsstellung des ersten Transformators ist die Spannung höher als ohne Kreisblindstrom. Diese Spannungsabweichung wird durch die aufgeschaltete Wechselspannung beim Spannungsregler für den ersten Transformator noch vergrößert, beim Spannungsregler für den zweiten Transformator aber verkleinert, da der Kreisblindstrom hier in die Gegenrichtung fließt. Bei idealer Einstellung kompensiert die aufgeschaltete Wechselspannung beim zweiten Transformator gerade die Spannungsänderung, so dass dessen Spannungsregler weiter mit der Spannung arbeitet, die sich ohne Kreisblindstrom ergeben würde. Der Spannungsregler des ersten Transformators arbeitet dagegen mit der doppelt so großen Spannungsabweichung wie ohne Berücksichtigung des Kreisblindstromes. In der Folge arbeiten die Spannungsregler aufeinander zu, bis der Kreisblindstrom ein Minimum erreicht hat. Ob die Spannungsregler in diesem Fall die Motorantriebe der Transformatoren ansteuern oder nicht, hängt von der eingestellten Empfindlichkeit der einzelnen Spannungsregler ab.

Nachteilig bei diesen bekannten Verfahren ist zunächst einmal, dass für jeden parallel gesteuerten Transformator ein separates Zusatzgerät, das erwähnte Parallelsteuergerät, erforderlich ist. Weiterhin erfordert das bekannte Verfahren eine relativ komplizierte Verkabelung zwischen den einzelnen Spannungsreglern und Parallelsteuergeräten, da die Phasenlage der aufgeschalteten Wechselspannung von entscheidender Bedeutung ist. Schließlich ist es beim bekannten Verfahren mit aufwändigen und damit fehlerträchtigen Eingriffen in die Verschaltung der Stromwandler verbunden, wenn ein Transformator aus dem Parallellauf genommen werden soll.

Aufgabe der Erfindung ist es, ein Verfahren zur Parallelsteuerung der eingangs genannten Art anzugeben, das neben Spannungsreglern keine Zusatzgeräte mehr erforderlich macht und auf stromführende Querverbindungen zwischen Messwandlern parallel laufender Transformatoren verzichten kann. Weiterhin ist es Aufgabe der Erfindung, durch ein entsprechendes Verfahren sicherzustellen, dass aus dem Parallellauf genommene Transformatoren den Parallellauf der verbleibenden Transformatoren nicht beeinflussen und keine Änderungen bei den Einstellungen der Spannungsregler erforderlich machen.

Diese Aufgaben werden erfindungsgemäß durch ein Verfahren zur Parallelsteuerung mit den Merkmalen des ersten Patentanspruches gelöst.

Das erfindungsgemäße Verfahren geht von der allgemeinen erfinderischen Idee aus, alle von den Strom- bzw. Spannungswandlern bisher durch Verschaltung ermittelten Messwerte jetzt mathematisch abzuleiten. Dadurch ist es möglich, alle zur Steuerung von parallel laufenden Transformatoren notwendigen elektrischen Parameter mit sehr einfachen Wandlerschaltungen bereitzustellen. Die Verkabelung zwischen den Messwandlern und dem jeweiligen Spannungsregler wird damit auf ein Minimum reduziert, so dass auch bei einer Parallelsteuerung von Transformatoren jeweils nur ein Strom- und ein Spannungswandler für jeden Transformator benötigt wird.

Das erfindungsgemäße Verfahren ist ebenso wie der bisherige Verfahrensablauf nach ANSI für Transformatoren mit vergleichbarer Nennleistung, Nennspannung, Kurzschlussspannung und Schaltgruppe, mit gleicher oder ungleicher Stufenspannung, geeignet.

Die Erfindung soll nachfolgend an Hand von Figuren beispielhaft noch näher erläutert werden. Es zeigen:

Figur 1     den schematischen Ablauf eines erfindungsgemäßen Verfahrens
Figur 2     den detaillierten Ablauf des ersten Verfahrensschrittes des erfindungsgemäßen Verfahrens
Figur 3     den detaillierten Ablauf des dritten Verfahrensschrittes des erfindungsgemäßen Verfahrens
Figur 4     eine schematische Darstellung des Ablaufes zur Ermittlung der Regelabweichung mit Kreisblindstromeinfluss.

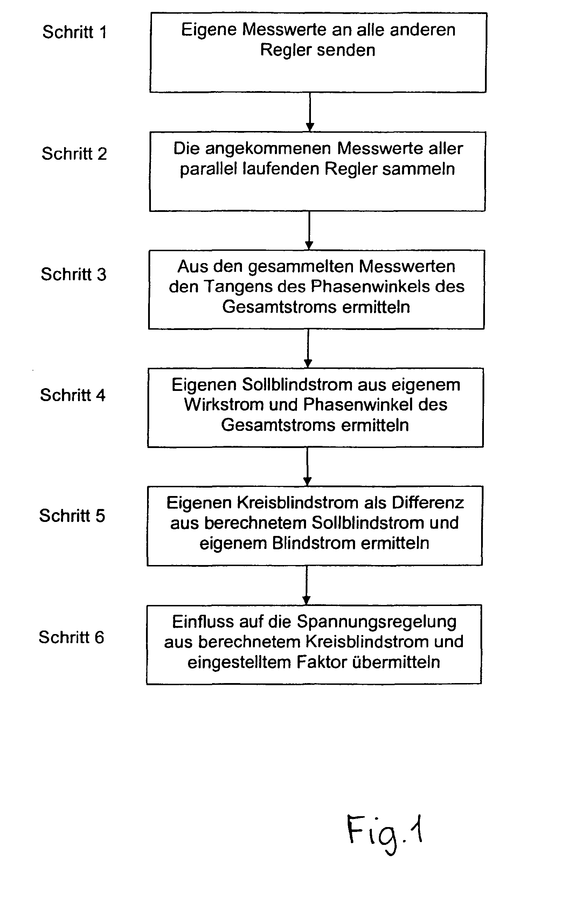

Zunächst soll das in Figur 1 dargestellte Verfahren insgesamt erläutert werden. Es besteht aus sechs einzelnen Verfahrensschritten, die seitlich nummeriert sind.

**Schritt 1:**

Zunächst werden von jedem Spannungsregler eigene Messwerte für Wirkstrom und Blindstrom ermittelt und den anderen Reglern übermittelt.

Durch die gleichzeitige Messung der Spannung und des Stromes kann im Spannungsregler die Phasenverschiebung $\phi$ bestimmt werden.

Blindstrom $I_X$ und Wirkstrom $I_r$ können mit einem Stromwandler vektoriell erfasst und dann im Controller des jeweiligen Spannungsreglers berechnet werden.

Der Stromwandler misst dazu den Laststrom $I_{load\,n}$ des jeweiligen Transformators $n$ als Scheinstrom.

Durch die einfache Berechung von:

$$I_{load\,n} * \cos\phi = I_{r\,n}$$

kann somit der Wirkstrom und mit

$$I_{load\,n} * \sin\phi = I_{X\,n}$$

der Blindstrom berechnet werden.

Dieses Verfahren ermöglicht im Gegensatz zu dem bekannten Regelverfahren nach ANSI die Nutzung von unterschiedlichen Wandlerschaltungen, was die Flexibilität wesentlich erhöht.

**Schritt 2:**

Die Messwerte aller parallel geschalteten Transformatoren werden gesammelt. Für diesen Schritt des Verfahrens ist die Tatsache entscheidend, dass jedem parallel geschalteten Transformator ein eigener Spannungsregler zugeordnet ist und dass alle Spannungsregler über einen gemeinsamen Datenbus, z. B. CAN-Bus, für den Informationsaustausch miteinander verbunden sind. Dieser sogen. CAN-Bus (Control Area Network) bietet neben einer hohen Übertragungsgeschwindigkeit bei einfachster Installation ein Höchstmaß an Übertragungssicherheit. Alle Regler können deshalb Informationen mit den anderen Spannungsreglern der parallel geschalteten Transformatoren austauschen.

**Schritt 3:**

Nachfolgend wird aus den gesammelten Messwerten der Phasenwinkel des Gesamtstromes ermittelt.

Jeder Spannungsregler ermittelt aus der Summe aller Wirkströme und der Summe der Blindströme aller parallel geschalteten Transformatoren den Phasenwinkel $\phi_{load}$ des sich einstellenden Gesamtstromes zur Last mit:

$$I_{r1} + I_{r2} + I_{r3} + ... + I_{rn} = \sum I_r$$

$$I_{X1} + I_{X2} + I_{X3} + ... + I_{rn} = \sum I_X$$

$$(\sum I_X) / (\sum I_r) = \tan \phi_{load}$$

$$\text{arc tan} (\sum I_X) / (\sum I_r) = \phi_{load}$$

Der Phasenwinkel an der Last $\phi_{load}$ wird dabei einzig und allein durch die elektrischen Eigenschaften der angeschlossenen Last vorgegeben.

**Schritt 4:**

Nachfolgend wird von jedem Regler der eigene Sollblindstrom aus dem eigenen Wirkstrom und dem im vorherigen Verfahrensschritt bereits ermittelten Tangens des Phasenwinkels des Gesamtstromes ermittelt.

Mit der Annahme, dass sich bei Schalten eines Stufenschalters dieser parallel geschalteten Transformatoren nur der Blindstrom $I_{Xn}$ durch den Transformator ändert (die angeschlossene Last bleibt ja konstant) und der Spannungsregler den Wirkstrom "seines" Transformators kennt, kann jetzt die Höhe des Blindstromes $I_{Xn}$ berechnet werden, der notwendig wäre, um zusammen mit dem gemessenen Wirkstrom $I_{rn}$ den Phasenwinkel an der Last $\phi_{load}$ zu erreichen.

**Schritt 5:**

Berechnung des eigenen Blindstromes jedes Reglers aus dem berechneten Sollblindstrom und dem eigenen Blindstrom.

Als Ergebnis des vorangegangenen Schrittes kennt der Spannungsregler den Blindstrom $I_{Xn\,required}$, den die Last fordert, und den Beitrag des Blindstromes $I_{Xn}$, den "sein" Transformator dazu liefert.

Aus der Differenz $I_{Xn\,required}$ und $I_{Xn}$ kann unter Berücksichtigung der Vorzeichen der beiden Ströme jetzt die Regelgröße berechnet werden:

$$\Delta \mathbf{I}_{X\,n} = \mathbf{I}_{X\,n} - \mathbf{I}_{X\,n\ required}$$

Diese Differenz ist ein Maß für den Kreisblindstrom und soll über die Betätigung des Stufenschaltwerkes am Transformator minimiert werden.

**Schritt 6:**

Dazu wird diese als Blindstrom dargestellte Regelgröße $\Delta \mathbf{I}_{X\,n}$ rechnerisch über einen Widerstand in eine Spannung umgewandelt. Die Höhe dieser Spannung ist ein Maß für die Regelabweichung des jeweiligen Spannungsreglers sowie die Regelabweichung aus dem Algorithmus der eigentlichen Spannungsregelung.

Ist diese Spannung = 0, ist keine Regelabweichung vorhanden und der Stufenschalter muss nicht auf eine andere Position gefahren werden.

Ist die Spannung $\neq$ 0, und die Höhe der Regelabweichung überschreitet einen vorgegebenen Grenzwert, so wird der Spannungsregler den Stufenschalter auf eine Position fahren, auf der der Blindstrom durch den Transformator minimal ist.

Da diese Regelabweichung von jedem der parallel geschalteten Spannungsregler für den jeweiligen Transformator vorzeichenbehaftet berechnet wird, werden alle Regler ihren zugeordneten Transformator auf eine Stufenschalterposition fahren, bei der der Kreisblindstrom $\Delta \mathbf{I}_{X\,n}$ minimal ist.

Dabei kann durchaus der eine Stufenschalter auf eine höhere Stufenschalterstellung gefahren werden, während die anderen Stufenschalter auf eine niedrigere Position fahren.

Im Ergebnis dessen fließt durch alle parallel geschalteten Transformatoren nach Abschluss des Regelvorganges immer ein minimaler Kreisblindstrom.

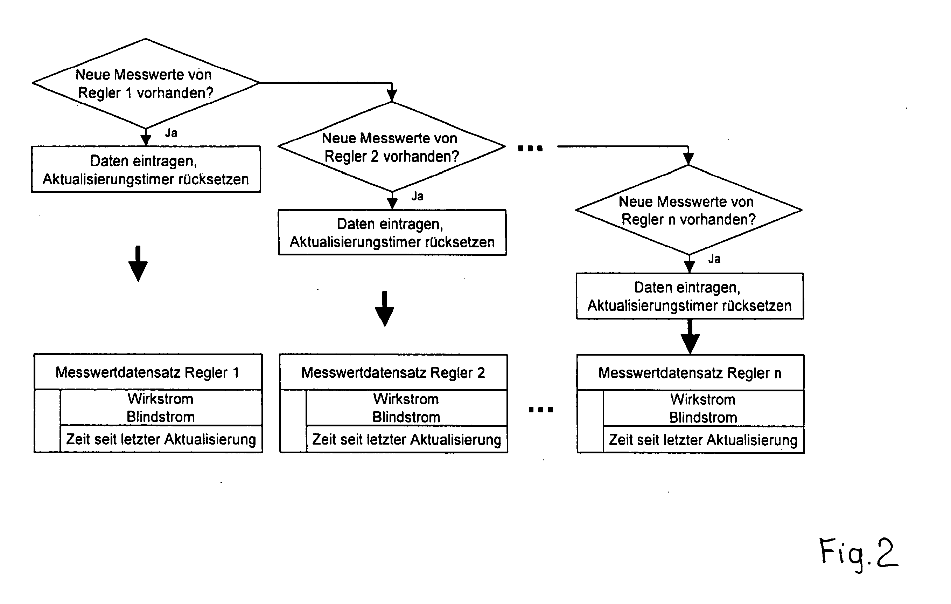

In Figur 2 ist der bereits erläuterte erste Schritt des Verfahrens noch einmal allein schematisch dargestellt. Es ist zu sehen, dass jeder Spannungsregler regelmäßig aktuelle Werte für den Wirkstrom und den Blindstrom ermittelt.

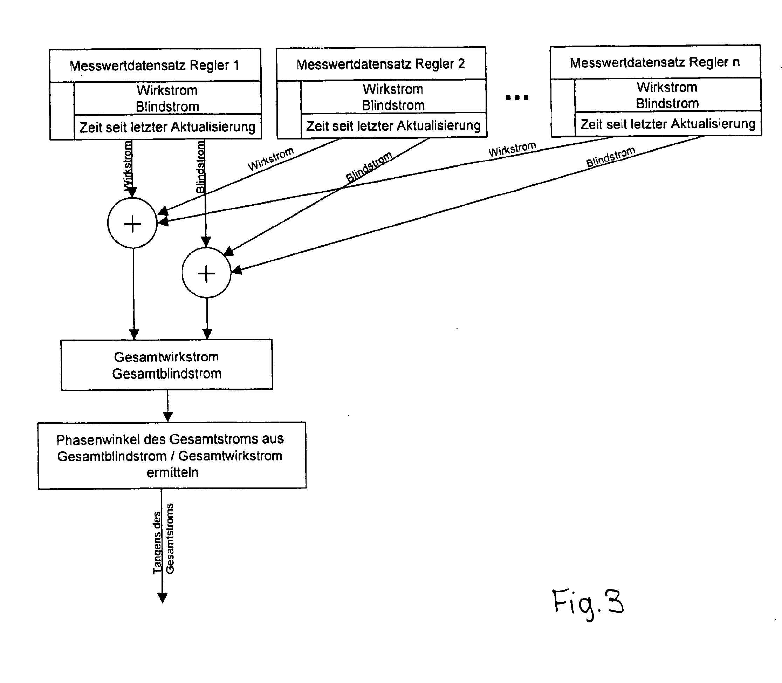

Figur 3 zeigt ebenfalls in schematischer Darstellung den dritten Schritt des erfindungsgemäßen Verfahrens noch einmal allein. Es ist hier verdeutlicht, wie aus den gesammelten Messwerten aller Regler, d. h. im Ergebnis den übermittelten Wirkstrom und Blindstrom aller Regler durch Zusammenführen der entsprechenden Werte ein Gesamtwirkstrom sowie ein Gesamtblindstrom ermittelt und daraus wiederum der Phasenwinkel des Gesamtstromes sich ergibt.

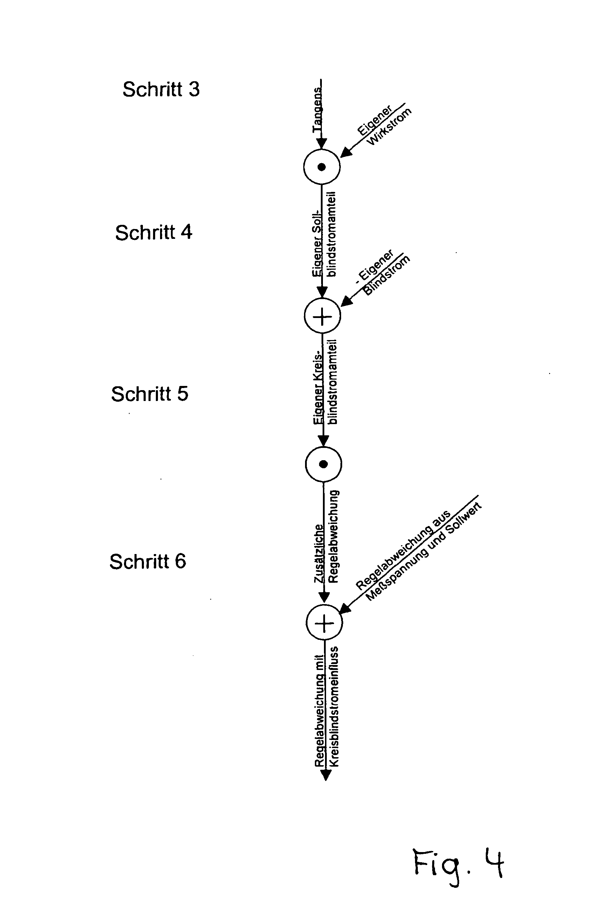

Figur 4 schließlich zeigt in schematischer Darstellung die letzten vier Schritte des erfindungsgemäßen Verfahrens noch einmal. Die seitliche Nummerierung bezieht sich auf die Nummerierung in Figur 1 für die einzelnen Schritte des vollständigen erfindungsgemäßen Verfahrens.

Insgesamt bietet das erfindungsgemäße Verfahren zur Parallellaufsteuerung gegenüber dem Stand der Technik eine Reihe von Vorteilen.

Zunächst einmal sind außer den, jedem zu regelnden Transformator zugeordneten, Spannungsreglern keine weiteren Parallelsteuergeräte mehr erforderlich.

Weiterhin sind keine stromführenden Querverbindungen an Messwandlern zwischen parallel laufenden Transformatoren erforderlich.

Weiterhin ist die Einstellung der Spannungsregler, d. h. z. B. Regelfaktor, Empfindlichkeit usw., vom Parallellauf unabhängig. Auch die Funktion der bei Spannungsreglern aus dem Stand der Technik bekannten LDC (Line Drop Compensation) wird nicht beeinflusst.

Beim erfindungsgemäßen Verfahren können einzelne Transformatoren jederzeit aus dem Parallellauf genommen oder auch wieder zugeschaltet werden, ohne den Parallellauf der verbleibenden Transformatoren zu stören. Hierbei sind, wie bereits erwähnt, keine Änderungen der spezifischen Einstellungen an den Spannungsreglern erforderlich.

Das erfindungsgemäße Verfahren gestattet prinzipiell den Parallellauf von Transformatoren unterschiedlicher Kenndaten, wie Bemessungsleistung, Stufenzahl und Stufenspannung - innerhalb der Begrenzung durch den höchsten zulässigen Kreisblindstrom.

**Patentansprüche**

1. Verfahren zur Parallelsteuerung von zwei oder mehr parallel geschalteten Stufentransformatoren,
   wobei jedem Stufentransformator ein eigener Spannungsregler zugeordnet ist und wobei alle Spannungsregler über einen gemeinsamen Datenbus für den Informationsaustausch miteinander verbunden sind,
   wobei zunächst die Ermittlung des Messwertes für Wirkstrom und Blindstrom für jeden parallel geschalteten Stufentransformator erfolgt,
   wobei anschließend aus der Summe aller Wirkströme und der Summe aller Blindströme aller parallel geschalteten

Stufentransformatoren der Phasenwinkel φ load des sich einstellenden Gesamtstromes ermittelt wird,
wobei wiederum nachfolgend der Sollblindstrom des jeweils zugeordneten Stufentransformators aus dessen Wirkstrom und dem ermittelten Phasenwinkel φ load des Gesamtstromes ermittelt wird
und wobei anschließend der jeweilige Kreisblindstrom aus dem zuvor ermittelten Sollblindstrom und dem jeweils eigenen Blindstrom ermittelt wird,
**dadurch gekennzeichnet,**
**dass** die Ermittlung der Messwerte für Wirkstrom und Blindstrom im jeweils zugeordneten Spannungsregler separat erfolgt und diese Werte an alle anderen Spannungsregler übermittelt werden,
**dass** nachfolgend eine Sammlung dieser Messwerte aller parallel geschalteten Stufentransformatoren in jedem Spannungsregler erfolgt,
**dass** die Ermittlung des Phasenwinkels φ load des sich einstellenden Gesamtstromes, die Ermittlung des Sollblindstromes und die Ermittlung des jeweiligen Kreisblindstromes in jedem Spannungsregler separat erfolgen,
**dass** für die Ermittlung des Phasenwinkels φ load des sich einstellenden Gesamtstromes zunächst die Summe der Wirkströme $\Sigma\, I_r$ mit der Gleichung

$$I_{r1} + I_{r2} + I_{r3} + ... + I_{rn} = \sum I_r$$

bestimmt wird, die Summe der Blindströme $\Sigma\, I_X$ mit der Gleichung

$$I_{X1} + I_{X2} + I_{X3} + ... + I_{Xn} = \sum I_X$$

bestimmt wird, dass der Phasenwinkel φ load mit den Gleichungen

$$(\sum I_{X)} / (\sum I_r) = \tan \varphi_{load} \text{ und } \arctan (\sum I_{X)} / (\sum I_r) = \varphi_{load}$$

ermittelt wird, dass der Sollblindstrom $I_{Xnsoll}$ jedes Reglers mit dem eigenen Wirkstrom $I_{rn}$ des jeweiligen Stufentransformators und dem Tangens des Phasenwinkels φ load des Gesamtstrom ermittelt wird, und dass schließlich eine Ermittlung der vorzeichenbehafteten Regelabweichung von jedem Spannungsregler für den jeweils zugeordneten Stufentransformator und die Erzeugung eines Stellbefehles zur Minimierung der Regelabweichung erfolgt.


**Claims**

1. Method for parallel control of two or more tapped transformers connected in parallel,
   wherein an individual voltage regulator is associated with each tapped transformer and wherein all voltage regulators are connected together by way of a common data bus for information exchange,
   wherein initially determination of the measured value for active current and inactive current for each tapped transformer connected in parallel is carried out,
   wherein subsequently the phase angle $\varphi_{load}$ of the total current arising is determined from the sum of all active currents and the sum of all inactive currents of all tapped transformers connected in parallel,
   wherein in turn subsequently the target inactive current of the respectively associated tapped transformer is determined from the active current thereof and the determined phase angle $\varphi_{load}$ of the total current and
   wherein subsequently the respective circular inactive current is determined from the previously determined target inactive current and the respective individual inactive current,
   **characterised in that**
   determination of the measured values for active current and inactive current is carried out separately in the respectively associated voltage regulator and these values are communicated to all other voltage regulators,
   subsequently collation of these measured values of all tapped transformers connected in parallel is carried out in each voltage regulator,
   determination of the phase angle $\varphi_{load}$ of the total current arising, determination of the target inactive current and determination of the respective circular inactive current is carried out separately in each voltage regulator,
   for determination of the phase angle $\varphi_{load}$ of the total current arising initially the sum of the active currents $\Sigma I_r$ is

determined by the equation

$$I_{r1} + I_{r2} + I_{r3} + \ldots + I_m = \Sigma I_r$$

and the sum of the active currents $\Sigma I_X$ is determined by the equation

$$I_{X1} + I_{X2} + I_{X3} + \ldots + I_{Xn} = \Sigma I_X,$$

the phase angle $\varphi_{load}$ is determined by the equations

$$(\Sigma I_X) / (\Sigma I_r) = \tan \varphi_{load} \quad \text{and} \quad \text{arc} \tan (\Sigma I_X) / (\Sigma I_r) = \varphi_{load},$$

the target inactive current $I_{Xntarget}$ of each regulator is determined by the actual active current $I_m$ of the respective tapped transformer and the tangent of the phase angle $\varphi_{load}$ of the total current and subsequently determination of the regulating deviation, in terms of sign, from each voltage regulator for the respectively associated tapped transformer and generation of a setting command for minimisation of the regulating deviation are carried out.

## Revendications

1. Procédé de commande en parallèle de deux ou plusieurs transformateurs à prises, branchés en parallèle selon lequel :

   - un régulateur de tension propre est associé à chaque transformateur à prises et tous les régulateurs de tension sont reliés par un bus de données commun pour l'échange d'informations,
   - on détermine tout d'abord la valeur de mesure du courant actif et du courant réactif pour chacun des transformateurs à prises, branchés en parallèle,
   - ensuite, à partir de la somme de tous les courants actifs et de la somme de tous les courants réactifs de tous les transformateurs à prises, branchés en parallèle, on détermine l'angle de phase $\varphi_{load}$ du courant total qui s'établit,
   - ensuite, on détermine le courant réactif de consigne de chaque transformateur à prises, associé, à partir de son courant actif et de l'angle de phase $\varphi_{load}$ déterminé pour le courant total, et
   - ensuite on détermine le courant réactif en boucle à partir du courant réactif de consigne déterminé préalablement et du courant réactif propre,

   procédé **caractérisé en ce qu'**

   - on détermine des valeurs de mesure du courant actif et du courant réactif séparément dans chaque régulateur de tension associé et on transmet ces valeurs à tous les autres régulateurs de tension,
   - ensuite, on collecte ces valeurs de mesure de tous les transformateurs à prises, branchés en parallèle dans chacun des régulateurs de tension,
   - séparément, on détermine l'angle de phase $\varphi_{load}$ du courant total qui s'établit, le courant réactif de consigne et le courant réactif en boucle respectif dans chaque régulateur de tension,
   - pour déterminer l'angle de phase $\varphi_{load}$ du courant total qui s'établit, on détermine tout d'abord :

     - la somme des courants actifs $\Sigma I_r$ selon l'équation

$$I_{r1} + I_{r2} + I_{r3} + \ldots + I_m = \Sigma I_r$$

- la somme des courants réactifs $\sum I_x$ selon l'équation

$$I_{x1} + I_{x2} + I_{x3} + \ldots + I_{xn} = \sum I_x$$

- on détermine l'angle de phase $\varphi_{load}$ selon les équations :

$$(\sum I_x) \,/\, (\sum I_r) = \tan \varphi_{load} \text{ et arc } \tan (\sum I_x) \,/\, (\sum I_r) = \varphi_{load}$$

- on détermine le courant réactif de consigne $I_{xnsoll}$ de chaque régulateur avec le propre courant actif $I_m$ du transformateur à prises respectif et de la tangente de l'angle de phase $\varphi_{load}$ du courant total, et
- enfin, on détermine l'équation de régulation avec son signe algébrique pour chaque régulateur de tension du transformateur à prises, associé et on génère un ordre d'actionnement pour minimiser l'écart de réglage.

| | |
|---|---|
| Schritt 1 | Eigene Messwerte an alle anderen Regler senden |
| Schritt 2 | Die angekommenen Messwerte aller parallel laufenden Regler sammeln |
| Schritt 3 | Aus den gesammelten Messwerten den Tangens des Phasenwinkels des Gesamtstroms ermitteln |
| Schritt 4 | Eigenen Sollblindstrom aus eigenem Wirkstrom und Phasenwinkel des Gesamtstroms ermitteln |
| Schritt 5 | Eigenen Kreisblindstrom als Differenz aus berechnetem Sollblindstrom und eigenem Blindstrom ermitteln |
| Schritt 6 | Einfluss auf die Spannungsregelung aus berechnetem Kreisblindstrom und eingestelltem Faktor übermitteln |

Fig. 1

Fig.2

| Messwertdatensatz Regler 1 |
|---|
| Wirkstrom<br>Blindstrom |
| Zeit seit letzter Aktualisierung |

| Messwertdatensatz Regler 2 |
|---|
| Wirkstrom<br>Blindstrom |
| Zeit seit letzter Aktualisierung |

· · ·

| Messwertdatensatz Regler n |
|---|
| Wirkstrom<br>Blindstrom |
| Zeit seit letzter Aktualisierung |

Wirkstrom

Blindstrom

Wirkstrom

Blindstrom

Wirkstrom

Blindstrom

+

+

| Gesamtwirkstrom<br>Gesamtblindstrom |
|---|

| Phasenwinkel des Gesamtstroms aus<br>Gesamtblindstrom / Gesamtwirkstrom<br>ermitteln |
|---|

Tangens des Gesamtstroms

Fig. 3

Schritt 3

Schritt 4

Schritt 5

Schritt 6

Tangens

Eigener Wirkstrom

Eigener Soll-blindstromanteil

- Eigener Blindstrom

Eigener Kreis-blindstromanteil

Zusätzliche Regelabweichung

Regelabweichung aus Meßspannung und Sollwert

Regelabweichung mit Kreisblindstromeinfluss

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10039918 C2
- DE 4004671 C1
- GB 2417376 A
- WO 9317480 A1
- EP 0482361 A2